# EUROPÄISCHE PATENTANMELDUNG

(11) **EP 2 093 422 A1**
(43) Veröffentlichungstag der Anmeldung: **26.08.2009**
(21) Anmeldenummer: 09002326.8
(22) Anmeldetag: 19.02.2009
(51) Int. Cl.: F04B 17/04, F04B 35/04, F04B 49/06, F04B 39/10

(54) **System und Verfahren zum Dosieren eines Fluids**

(30) Priorität: 19.02.2008 DE 102008010073
(71) Anmelder: THOMAS MAGNETE GmbH, 57562 Herdorf (DE)
(72) Erfinder: Ohligschläger, Olaf, 57520 Grünebach (DE); Müller, Michael, 53773 Hennef (DE); Haase, Walter, 57290 Neunkirchen (DE)
(74) Vertreter: Sparing, Rolf Klaus

(57) **Zusammenfassung**

Die Erfindung betrifft ein System zum Dosieren eines Fluids von einem Vorratstank (4) an eine Dosiereinheit (3), umfassend eine Dosierpumpe (2), die durch eine Tankleitung (9) mit dem Vorratstank (4) und durch eine Dosierleitung (5) mit der Dosiereinheit (3) jeweils in Fluidverbindung steht, wobei ein Betätigen der Dosierpumpe (2) das Fluid aus dem Vorratstank (4) zur Dosiereinheit (3) fördert, wobei zwischen Dosierpumpe (2) und Dosiereinheit (3) ein in Richtung der Dosiereinheit (3) öffnendes Rückschlagventil vorgesehen ist, welches in seiner Schließstellung leckagebehaftet ist, wobei in einer vorbestimmten Betriebsstellung der Dosierpumpe (2) eine Fluidverbindung von dem Rückschlagventil zum Vorratstank (4) vorliegt, so dass ein Fluid-Leckagestrom in Richtung des Vorratstanks (4) eine Druckminderung in der Dosierleitung (5) bewirkt. Ein System zum Dosieren eines Fluids von einem Vorratstank an eine Dosiereinheit, bei dem mit einfach Mitteln eine sicher betätigbare Druckentlastung des Leistungssystems zwischen Dosierpumpe und Dosiereinheit möglich ist, wird erfindungsgemäß dadurch geschaffen, dass die Dosierpumpe (2) in Form einer magnetisch betätigbaren Hubkolbenpumpe (2) mit einem Kolben ausgeführt ist, dass der Kolben zwischen einer Ausgangsstellung, in der eine Fluidverbindung zwischen Dosierpumpe (2) und Vorratstank (4) geschlossen ist, und einer Endstellung, in der ein Förderhub in Richtung der Dosiereinheit (3) ausgeführt ist, verschiebbar ist, und dass der Kolben in der vorbestimmten Betriebsstellung der Dosierpumpe (2) in einer Zwischenstellung zwischen der Ausgangsstellung und der Endstellung angeordnet ist.

## Beschreibung

Die Erfindung betrifft ein System zum Dosieren eines Fluids nach dem Oberbegriff des Anspruchs 1, und ein entsprechendes Verfahren.

Bei Kraft- und Nutzfahrzeugen kann die Regeneration von Dieselpartikelfiltern durch Erhöhung der Abgastemperatur erzielt werden. Hierzu wird eine genau dosierte Menge Dieselkraftstoff in den Abgasstrang des Fahrzeugs eingespritzt und dort verbrannt. Hierbei oxidiert der Kraftstoff innerhalb des Katalysators. Dies führt zu einer Erhöhung der Abgastemperatur und damit zu einem Abbrennen der angesammelten Partikelablagerungen. Für das Einspritzen des Dieselkraftstoffs in den Abgasstrang sind verschiedene Systeme bekannt, z. B. Zerstäubung des Dieselkraftstoffes mittels Injektordüse oder mittels einer passiven Düse über eine Injektorsteuerung.

DE 101 47 172 A1 beschreibt eine Reduktionsmittelpumpe für eine Abgasnachbehandlungsanlage einer Brennkraftmaschine. Ein Dosiersteuergerät steuert ein elektromagnetisches Dosierventil, das an einem Abgasstrang eines Fahrzeugs stromaufwärts eines Katalysators angebracht ist. Das Dosiersteuergerät ist mit dem Dosierventil über eine Zuführungsleitung verbunden. Die Zuführungsleitung ist über eine Dosierpumpe mit einem Vorratsbehälter verbunden. Durch eine Ansteuerung des Dosiersteuergeräts kann eine Harnstofflösung durch die Zuführungsleitung an das Dosierventil unter Hochdruck zugeführt werden, um die Harnstofflösung in den Abgasstrang einzuspritzen. Durch die Einspritzung wird der Harnstoff hydrodlysiert und durchgemischt. In dem Katalysator erfolgt die katalytische Reduktion des NOx im Abgas zu N₂ und H₂O. Das vorstehend genannte Einspritzsystem gestattet ein Fördern von Harnstofflösung durch die Zuführungsleitung lediglich in Richtung des Dosierventils, so dass diese Leitung permanent unter Druck steht.

DE 42 30 056 A1 beschreibt eine Zerstäubereinrichtung, die sich zum Einsprühen eines Reduktions- oder Oxidationsmittels in einen Abgasstrom zum Zwecke der Reinigung der Abgase von Schadstoffen eignet. Eine Mischeinrichtung ist über eine Zufuhrleitung mit einem Vorratsbehälter verbunden, der mit einem zu zerstäubenden Medium gefüllt ist. In der Zufuhrleitung ist eine Dosierpumpe angeordnet, die das Medium unter Druck in die Mischeinrichtung fördert. In die Mischeinrichtung wird zusätzlich Druckgas eingeführt, das sich innerhalb der Mischeinrichtung mit dem von der Dosierpumpe geförderten Medium vermischt. Die Mischeinrichtung ist über eine Mischleitung mit einer Zerstäuberdüse verbunden. Nach einer Vermischung des Mediums mit dem Druckgas innerhalb der Mischeinrichtung wird dieses durch die Mischleitung zur Zerstäuberdüse gefördert und tritt aus dieser heraus. Die Mischeinrichtung ist so ausgestaltet, dass stets ein gleichmäßiger Flüssigkeitsaustausch in die Mischleitung hinein erfolgt. Hierbei ist jedoch lediglich ein Fördern in einer Richtung, d. h. in Richtung der Zerstäuberdüse möglich, wobei die zur Zerstäuberdüse führende Mischleitung permanent unter Druck steht. Entsprechend können sich an der Zerstäuberdüse nachteilige Leckagen bilden, die am Abgasstrang zu unerwünschten Verkohlungen oder dergleichen führen können.

DE 10 2004 046 881 A1 beschreibt ein Zuführsystem für ein Medium, insbesondere zur Behandlung von Abgasen einer Brennkraftmaschine und ein Verfahren zum Betreiben eines solchen Zuführsystems. Von einem Vorratstank führt eine Zuführleitung zu einer Dosiereinheit, die mit einer Abgasleitung eines Kraftfahrzeugs verbunden ist. Von der Dosiereinheit führt eine Rückführleitung zurück in den Vorratstank, wobei durch die Rückführleitung ein Rückführen des Medium in den Vorratstank möglich ist. Ein solches Zuführsystem dient zur Behandlung von Abgasen einer Brennkraftmaschine, um die in dem Abgas enthaltenen Stickoxide zu vermindern. Die erläuterte Konfiguration des Zuführsystems mittels mehrerer Leitung, d. h. einer Zuführleitung und einer Rückführleitung, ist bauraumintensiv und kostspielig in der Herstellung.

DE 10 2004 054 238 A1 beschreibt ein Dosiersystem sowie ein Verfahren zum Betreiben eines solchen Dosiersystems. Dieses Dosiersystem dient zur Verminderung von Stickoxiden, die in einem Abgas eines Verbrennungsmotors enthalten sind. Hierzu ist ein Dosierventil stromaufwärts eines Katalysators eines Kraftfahrzeugs angebracht, welches von einer Förderpumpe mit einem Reduktionsmittel versorgt wird. Entsprechend ist die Förderpumpe mit dem Dosierventil über eine Förderleitung verbunden. Bei einem Normalbetrieb des Fahrzeugmotors wird das Reduktionsmittel von der Förderpumpe durch die Förderleitung zum Dosierventil gefördert, um eine Einspritzung des Reduktionsmittels in den Abgasstrang zu gewährleisten. Beim Abstellen des Fahrzeugmotors kann ein Bereich der Förderleitung zwischen der Förderpumpe und dem Dosierventil entgegengesetzt zur Normalbetriebs-Fördervorrichtung entleert werden, wobei die Förderrichtung der Förderpumpe umgekehrt wird und das Reduktionsmittel entgegen der im Betrieb üblichen Normalbetrieb-Förderrichtung in einen Vorratstank zurückbefördert wird. Dies lässt sich jedoch nur durch aufwendige Vorkehrungen treffen, z. B. durch ein Umkehren der Förderrichtung, der Förderpumpe. Alternativ kann eine zusätzliche Pumpe vorgesehen sein, um das Reduktionsmittel aus dem Bereich der Förderleitung zwischen der Förderpumpe und dem Dosierventil heraus zu pumpen. Solche apparativen bzw. konstruktiven Vorkehrungen sind kostspielig und bauraumintensiv.

DE 10 2004 050 023 A1 beschreibt eine Einrichtung zur dosierten Einspritzung eines Reduktionsmittels in den Abgastrakt einer Brennkraftmaschine. Die Einspritzung erfolgt mit durchgehend hoher und gleichmäßiger Zerstäubungsqualität unabhängig von der Fördermenge. Hierzu wird eine Pumpe, insbesondere eine Kolbenpumpe oder eine Membranpumpe verwendet, die eine pulsierende Förderung des Reduktionsmittels zu einer Düse vornimmt, die an einem Abgastrakt einer Brennkraftmaschine angeordnet ist und darin mündet. Die Düse ist mit einem im Takt des Förderpulses der Pumpe eine Durchflussverbindung selbständig öffnenden und schließenden Ventilelement ausgebildet, das die Einspritzung von Reduktionsmittel in Bereichen niedrigen Drucks zulässt. Entsprechend erfolgt die Zerstäubung des Reduktionsmittels ausschließlich in Bereichen hohen Drucks. Das Ventilelement ist als Rückschlagventil ausgebildet und verfügt über einen Dichtsitz, mit dem ein längsverschiebliches Element mit einem tellerförmigen Rand in der Schließstellung des Ventilelements in Kontakt gelangt. Das längsverschiebliche Element ist durch eine spiralförmige Schließfeder in Richtung der Schließstellung des Ventilelements vorgespannt. Wenn die Kraft aus dem auf die Flächen des verschieblichen Elements wirkenden Drucks größer ist als die Kraft der Schließfeder, hebt das verschiebliche Element vom Dichtsitz ab, und es erfolgt eine Eindüsung von Reduktionsmittel in den Abgastrakt der Brennkraftmaschine. Durch einen ausreichend dichten Sitz zwischen Dichtsitz und dem Ventilelement ist ein Rückströmen des Reduktionsmittels in Richtung der Pumpe nicht möglich.

Um die Hochdruckleitung zwischen der Pumpe und der Düse zu entlasten, ist gemäß DE 10 2004 050 023 A1 eine Druckentlastungsleitung vorgesehen, die an die Hochdruckleitung und einen Arbeitsraum angeschlossen ist. Die Druckentlastungseinrichtung kann entweder als Rückschlagventil oder als Membran, die unter Verschiebung eines Volumens zwei gegensätzlich gewölbte Positionen einnehmen kann, ausgeführt sein. Ungeachtet dieser Alternativen ist zur Druckentlastung der Hochdruckleitung zwischen Pumpe und Düsen bei der Einrichtung gemäß DE 10 2004 050 023 A1 ein zusätzlicher apparativer Aufwand erforderlich, der bauraumintensiv ist und zu erhöhten Kosten führt.

DE 23 48 865 A1 beschreibt ein System zum Einspritzen von Brennstoff in eine Brennkraftmaschine mittels einer Dosierpumpe. Die Dosierpumpe weist eine Pumpkammer auf, die über eine seitlich angeordnete Tankleitung mit einem Vorratstank verbunden ist. An die Pumpkammer schließt sich stromabwärts eine Ventilkammer an, die mit einer Dosierleitung verbunden ist, welche zu einer als Einspritzdüse ausgebildeten Dosiereinheit führt. In der Pumpkammer befindlicher Brennstoff kann mittels eines Kolbens in die Ventilkammer und weiter in die Dosierleitung verdrängt werden. In der Ventilkammer ist eine Rückschlagventilanordnung mit einem ersten Rückschlagventil vorgesehen, welches in Richtung der Dosierleitung öffnet. Das Rückschlagventil umfasst einen im Wesentlichen hohlzylinderförmigen ersten Ventilkörper, der an seinem der Pumpkammer zugewandten Ende einen konischen Umfang aufweist, der mit einem Ventilsitz zusammenwirkt. In der Ventilkammer ist im Bereich der Dosierleitung ein Ventilträger angeordnet, auf dem das von der Pumpkammer abgewandte Ende des ersten Ventilkörpers mit Gleitsitz aufgenommen ist, so dass der erste Ventilkörper durch den Ventilträger geführt axial verlagerbar ist. Eine sich an dem Ventilträger abstützende Druckfeder spannt den ersten Ventilkörper in Richtung des Ventilsitzes vor. Bei einem Betätigen des Kolbens wird Brennstoff aus der Pumpkammer gegen den ersten Ventilkörper des ersten Rückschlagventils gedrängt, so dass der erste Ventilkörper entgegen der Vorspannung der Druckfeder verlagert wird. Brennstoff kann dann durch die Ventilkammer strömen und wird über in dem Ventilträger angeordnete Kanäle in die Dosierleitung geleitet. Bei geschlossenem ersten Rückschlagventil und Vorliegen eines Überdrucks in der Dosierleitung kann Brennstoff auch umgekehrt in Richtung der Pumpkammer zurückströmen. Hierzu weist die Rückschlagventilanordnung ein zweites Rückschlagventil auf, dass im Bereich einer der Dosierleitung gegenüberliegenden Öffnung des Ventilträgers angeordnet ist. Das zweite Rückschlagventil weist einen ebenfalls hohlzylinderförmigen Ventilkörper auf, der über eine zweite Druckfeder an dem ersten Ventilkörper abgestützt ist und von dieser in Richtung eines zweiten Ventilsitzes vorgespannt wird. Bei Vorliegen eines Überdrucks in der Dosierleitung wird Brennstoff durch die Öffnung gegen den zweiten Ventilkörper gedrängt, so dass dieser in Richtung der Pumpkammer verlagert wird und Brennstoff durch in dem zweiten Ventilkörper angeordnete Durchlasskanäle in die Pumpkammer zurückströmen kann.

DE 199 61 947 A1 beschreibt eine Vorrichtung zur Abgasnachbehandlung für Brennkraftmaschinen, bei welcher eine Harnstoff-Wasser-Mischung aus einem Vorratstank mittels einer Dosierpumpe in eine Mischkammer gefördert wird. Die Dosierpumpe ist mittels einer Tankleitung mit dem Vorratstank und mittels einer Dosierleitung mit der Mischkammer verbunden. Zwischen der Dosierpumpe und der Mischkammer ist ein in Richtung der Mischkammer öffnendes Rückschlagventil angeordnet, dass ein Rückströmen von Harnstoff-Wasser-Mischung aus dem Bereich der Mischkammer hin zu der Dosierpumpe unterbindet. Das Rückschlagventil ist nicht leckagebehaftet. Die mittels der Dosierpumpe in die Mischkammer geförderte Harnstoff-Wasser-Mischung wird in der Mischkammer mit Druckluft beaufschlagt und von dort in Richtung eines Abgassystems der Brennkraftmaschine weitergeleitet. Eine besonders gute Durchmischung des Harnstoff-Wasser-Gemisches mit der Druckluft wird dadurch erreicht, dass die Druckluft über eine Düse mit Schallgeschwindigkeit in die Mischkammer eingeleitet wird.

Die vorstehend genannten Systeme und Einrichtungen zur Einspritzung eines Reduktionsmittel in einem Abgasstrang eines Fahrzeugs sind komplex und wegen der Anzahl an in Wechselwirkung stehender Komponenten kostspielig und bauraumintensiv, und bringen ein vergleichsweise hohes Gewicht mit sich.

Entsprechend liegt der Erfindung die Aufgabe zugrunde, ein System zum Dosieren eines Fluids von einem Vorratstank an eine Dosiereinheit zu schaffen, bei dem mit einfachen Mitteln eine sicher betätigbare Druckentlastung des Leitungssystems zwischen Dosierpumpe und Dosiereinheit möglich ist.

Diese Aufgabe wird durch ein System mit den Merkmalen von Anspruch 1 und durch ein Verfahren mit den Merkmalen von Anspruch 12 gelöst. Vorteilhafte Weiterbildungen der Erfindung sind in den abhängigen Ansprüchen definiert.

Ein erfindungsgemäßes System umfasst eine Dosierpumpe, die durch eine Tankleitung oder Rücklaufleitung mit dem Vorratstank und durch eine Dosierleitung mit der Dosiereinheit jeweils in Fluidverbindung steht. Bei einem Betätigen der Dosierpumpe wird das Fluid aus dem Vorratstank zur Dosiereinheit gefördert. Zwischen der Dosierpumpe und der Dosiereinheit ist ein Rückschlagventil vorgesehen, das in Richtung der Dosiereinheit bei Druckbeaufschlagung öffnen kann. Das Rückschlagventil ist in seiner Schließstellung Leckage behaftet, wobei in einer vorbestimmten Betriebsstellung der Dosierpumpe eine Fluidverbindung von dem Rückschlagventil zum Vorratstank vorliegt, so dass ein Fluid-Leckagestrom in Richtung des Vorratstanks eine Druckminderung in der Dosierleitung bewirkt. Durch eine solche Druckminderung ist ein ungewollte Leckage des Fluids im Bereich der Dosiereinheit wirkungsvoll verhindert, da die Dosierleitung wegen des gezielten Rückstroms des Fluids in den Phasen, in denen keine Einspritzung über die Dosiereinheit erfolgt, nicht unnötig lange unter Hochdruck steht.

Die Dosierpumpe, mittels der das Fluid an die Dosiereinheit dosiert wird, kann mittels einer Tankleitung mit dem Vorratstank, in dem das Fluid gespeichert ist, verbunden sein. Alternativ hierzu kann die Dosierpumpe an eine Rücklaufleitung angeschlossen sein, die von einer zum Verbrennungsmotor führende Einspritzleitung abgezweigt ist. In der Einspritzleitung ist zumindest eine Einspritzpumpe angeordnet, mittels der Kraftstoff, z. B. Dieselkraftstoff in Richtung des Motors gefördert wird. Der Betrieb dieser Einspritzpumpe ist so gewählt, dass mehr Kraftstoff gefördert wird, als für den Betrieb des Motors erforderlich ist. Entsprechend wird eine überschüssige Menge des Kraftstoffs durch die Rücklaufleitung, die von der Einspritzleitung abgezweigt ist, in Richtung des Vorratstanks zurück geführt. Dadurch ist gewährleistet, dass die Dosierpumpe, die aus der Rücklaufleitung gespeist wird, stets mit einem ausreichenden Volumen an Kraftstoff bzw. Fluid versorgt wird, um anschließend ein Dosieren zur Dosiereinheit sicher zu stellen.

Das erfindungsgemäße System zeichnet sich durch eine geringe Anzahl von zusätzlichen Komponenten, z. B. zusätzlichen Rückstromleitungen oder dergleichen, aus, weil die Dosierleitung zwischen Dosierpumpe und Dosiereinheit nicht nur als Förderleitung in Richtung der Dosiereinheit, sondern gleichzeitig als Rückstromleitung in Richtung der Dosierpumpe dient. Hierdurch können die Herstellkosten für das erfindungsgemäße System reduziert werden. Zusätzlich ergibt sich für das erfindungsgemäße System ein besseres Sprayverhalten für die Einspritzung mittels der Dosiereinheit, weil höhere Einspritzesdrücke möglich sind. Im Vergleich zu vorbekannten Systemen sind die Komponenten, die für das erfindungsgemäße System verwendet werden können, kleiner und leichter, wobei die Einspritzung unabhängig von anderen Komponenten jederzeit erfolgen kann. Ein weiterer Vorteil besteht darin, dass eine elektrische Kontaktierung des Systems sich auf einen einzigen Stecker reduziert, nämlich jenen für eine Bestromung und Ansteuerung der Dosierpumpe.

In vorteilhafter Weiterbildung der Erfindung kann das Rückschlagventil derart ausgestaltet sein, dass es in seiner Schließstellung einen Leckagestrom mit einem vorbestimmten Durchsatz durchlässt. Dies kann mittels einer definierten Oberflächenrauhigkeit eines Schließelements des Rückschlagventils und/oder einer Sitzfläche des Rückschlagventils erzielt werden, wobei das Schließelement in der Schließstellung des Rückschlagventils auf der Sitzfläche aufsitzt, d. h. damit in Kontakt gelangt. Ergänzend oder alternativ zu definierten Oberflächenrauhigkeiten kann eine Durchlassöffnung zwischen dem Schließelement des Rückschlagventils und der zugeordneten Sitzfläche vorgesehen sein. Hierbei kann diese Durchlassöffnung entweder vollständig an dem Schließelement, z. B. an dessen Außenumfangsfläche, oder vollständig in der Sitzfläche ausgebildet sein. Es ist auch möglich, die Durchlassöffnung teils in dem Schließelement und teils in der Sitzfläche auszubilden, wobei in der Schließstellung des Rückschlagventils sich dann die Durchlassöffnung bei einer Kontaktanlage des Schließelements mit seiner Sitzfläche ergibt.

In vorteilhafter Weiterbildung der Erfindung kann das Rückschlagventil in einem Gehäuse der Dosierpumpe aufgenommen sein, oder es kann in der Dosierleitung angeordnet sein. Eine unmittelbare Aufnahme des Rückschlagventils in dem Gehäuse der Dosierpumpe führt zu dem Vorteil einer Bauteilintegration, woraus ein verminderter Einbauraum verbunden mit günstigeren Herstellungskosten resultiert.

In vorteilhafter Weiterbildung der Erfindung kann die Dosierpumpe in Form einer Hubkolbenpumpe mit einem Kolben ausgebildet sein, wobei ein Fördern des Fluids in Richtung der Dosiereinheit durch eine translatorische Verschiebung des Kolbens innerhalb des Pumpengehäuses erfolgt. Der Kolben kann hierbei zwischen einer Ausgangsstellung und einer Einstellung translatorisch verschoben werden. In der Ausgangsstellung des Kolbens ist eine Fluidverbindung zwischen Dosierpumpe und Vorratstank geschlossen. In einer Endstellung des Kolbens ist ein Förderhub in Richtung der Dosiereinheit ausgeführt. Der Antrieb der Dosierpumpe erfolgt derart, dass der Kolben sich in einer Zwischenstellung zwischen seiner Ausgangsstellung und seiner Endstellung positionieren lässt. Die vorbestimmte Betriebsstellung der Dosierpumpe, in der eine Fluidverbindung von dem Rückschlagventil zum Vorratstank vorliegt, ist dann erreicht, wenn der Kolben in seiner Zwischenstellung gehalten ist. In dieser Zwischenstellung besteht zwischen dem Rückschlagventil und der Tankleitung, die zu dem Vorratstank führt, durch die Dosierpumpe hindurch eine Fluidverbindung, sodass ein Fluid-Leckagesrom in Richtung des Vorratstanks strömen kann.

Durch das leckagebehaftete Rückschlagventil ist in einer Betriebsphase des Systems, wenn das Fluid nicht unter Druck in Richtung der Dosiereinheit befördert wird, sichergestellt, dass ein bestimmter Fluid-Leckagestrom in Richtung der Dosierpumpe vorliegt. Hierbei wird durch die Stellung des Kolbens bestimmt, ob ein Rückströmen dieses Leckagestroms durch die Tankleitung zurück zum Vorratstanks möglich ist. Dies ist dann der Fall, wenn der Kolben in seiner Zwischenstellung positioniert ist. Entsprechend ist eine stetige Druckabnahme in der Dosierleitung durch ein solches Rückströmen gewährleistet. Die Tankleitung dient hierbei als Rücklaufleitung bzw. Dekompressionsleitung. Diese Doppelfunktion hält die erforderliche Anzahl von Bauelementen für das erfindungsgemäße System gering und vermeidet Mehrkosten. Falls sich der Kolben in seiner Ausgangsstellung befindet, ist die Fluidverbindung zwischen der Dosierpumpe und dem Vorratstank bzw. der Rücklaufleitung geschlossen. Entsprechend dient die Dosierpumpe als Absperrventil in Richtung des Vorratstanks bzw. der Rücklaufleitung, was ein Bereitstellen von zusätzlichen Absperrventilen überflüssig macht.

In vorteilhafter Weiterbildung der Erfindung kann die Hubkolbendosierpumpe einen elektromagnetischen Antrieb aufweisen, der eine Antriebsspule umfasst. Die Zwischenstellung des Kolbens kann dadurch eingestellt werden, dass sich die Antriebsspule im Vergleich zum Normalbetrieb der Hubkolbendosierpumpe mit vermindertem Erregerstrom antreiben bzw. ansteuern lässt. Entsprechend wird der Kolben ausgehend von seiner Ausgangstellung nicht vollständig in seine Endstellung überführt, sondern nur teilweise innerhalb des Pumpengehäuses in seine Zwischenstellung verschoben. Für den Antriebskolben sind eine Mehrzahl von Zwischenstellungen möglich, die sich alle durch das gemeinsame Merkmal auszeichnen, dass dabei eine Fluidverbindung zwischen dem Rückschlagventil und der Tankleitung durch die Dosierpumpe hindurch gewährleistet ist. Die Antriebsspule kann mit verschiedenen Stromprofilen erregt werden, um den Kolben in einer Zwischenstellung bzw. einer seiner Zwischenstellungen zu halten, um einen möglichst geringen Druck in der Dosierleitung zu realisieren.

Ein erfindungsgemäßes Verfahren basiert auf einer Bereitstellung eines Systems zum Dosieren eines Fluids, z. B. ein Reduktionsmittel von einem Vorratstank an eine Dosiereinheit, wobei zwischen dem Vorratstank und der Dosiereinheit eine Dosierpumpe angeordnet ist. Über entsprechende Leitungen fördert die Dosierpumpe das Fluid von dem Vorratstank an die Dosiereinheit. Dies wird dadurch erzielt, dass beim Betätigen der Dosierpumpe ein Förderelement der Dosierpumpe von einer Ausgangsstellung in eine Endstellung verlagert wird. In einem weiteren Schritt des Verfahrens wird die Dosierpumpe derart angesteuert, dass das Förderelement in einer zwischen der Ausgangsstellung und der Endstellung befindlichen Zwischenstellung gehalten wird, in der eine Fluidverbindung zwischen einem Rückschlagventil und einer zum Vorratstank führenden Tankleitung oder Rücklaufleitung durch die Dosierpumpe hindurch besteht. Im Ergebnis kann ein Fluid-Leckagestrom in Richtung des Vorratstanks strömen, wodurch eine Druckminderung in er Dosierleitung eintritt.

Mittels der genannten Zwischenstellung des Förderelements der Dosierpumpe dient diese als Ventil, wobei in der Zwischenstellung des Kolbens ein Rückströmen des Fluid-Leckagestroms in Richtung des Vorratstanks erfolgt. Falls sich das Förderelement in seiner Ausgangsstellung befindet, ist die Fluidverbindung in Richtung des Vorratstanks verschlossen, so dass kein weiteres Rückströmen vorliegt. Somit lässt sich über die Stellung des Förderelements ein gezieltes Strömen innerhalb des Fluids des Leitungssystems einstellen.

In vorteilhafter Weiterbildung des erfindungsgemäßen Verfahrens kann die Dosierpumpe in Form einer Hubkolbenpumpe ausgeführt sein, wobei das Förderelement als Antriebskolben ausgeführt ist. Falls die Hubkolbenpumpe einen elektromagnetischen Antrieb mit einer Antriebsspule aufweist, lässt sich die Zwischenstellung des Kolbens durch ein Erregen der Antriebsspule mit vermindertem Erregerstrom einstellen. Für die übrigen Vorteile des erfindungsgemäßen Verfahrens wird zur Vermeidung von Wiederholungen auf die Erläuterung des Systems verwiesen.

Das System und das Verfahren gemäß der Erfindung eignen sich insbesondere zur Regeneration von Dieselpartikelfiltern von Kraftfahrzeugen und/oder Nutzfahrzeugen. Die Erfindung bezweckt das Vermeiden einer Leckage an einer an einem Abgasstrang angebrachten Dosiereinheit, die zum Beispiel als passive Düse ausgeführt sein kann. Hierzu wird der Druck innerhalb der Dosierleitung, die zur passiven Düse führt, abgebaut, wenn kein Einspritzen mit der Düse erfolgt. Wie vorstehend erläutert, wird hierzu die Dosierpumpe, die als Hubkolbenpumpe ausgeführt sein kann, als Ventil betrieben, wobei eine Fluidverbindung zwischen Rückschlagventil und Vorratstank in der Zwischenstellung des Kolbens vorliegt. In seiner Zwischenstellung führt der Kolben keinen vollständigen Förderhub, sondern stattdessen einen Teilhub aus. Dadurch wird ein Sitzventil, das an dem Kolben innerhalb des Pumpengehäuses angrenzend zum Tank angeordnet ist, teilweise geöffnet, was einen Druckabbau innerhalb der Dosierleitung ermöglicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachfolgend anhand von verschiedenen Ausführungsformen in der Zeichnung schematisch dargestellt und wird unter Bezugnahme auf die Zeichnung ausführlich beschrieben.

Es zeigen:
- Fig. 1: eine vereinfachte Gesamtansicht eines erfindungsgemäßen Systems,
- Fig. 2: eine Längsquerschnittansicht einer Dosierpumpe des Systems von Fig. 1, wobei ein Kolben in einer Ausgangsstellung positioniert ist,
- Fig. 3: eine Längsquerschnittansicht einer Dosierpumpe des Systems von Fig. 1, wobei ein Kolben in einer Zwischenstellung positioniert ist,
- Fig. 4: eine vergrößerte Ansicht des Bereichs I von Fig. 3,
- Fig. 5: ein Zeit-Diagramm, in dem die Größen Strom und Druck als Funktion über die Zeit aufgetragen sind, und
- Fig. 6: eine vereinfachte Gesamtansicht einer weiteren Ausführungsform des erfindungsgemäßen Systems.

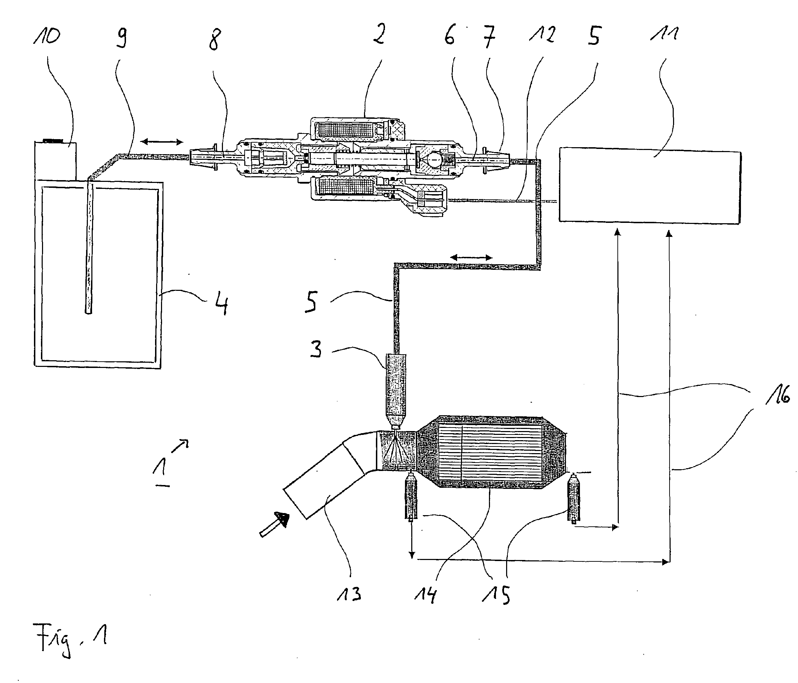

Nachstehend ist unter Bezugnahme auf Fig. 1 eine Ausführungsform eines erfindungsgemäßen Systems 1 erläutert.

Das erfindungsgemäße System 1 umfasst eine Dosierpumpe 2, eine Dosiereinheit in Form einer passiven Düse 3 und einen Vorratstank 4. Die Dosierpumpe 2 steht mit der Düse 3 über eine Dosierleitung 5 in Fluidverbindung, die an einer Ausgangsöffnung 6 der Dosierpumpe 2 über eine geeignete Muffe 7 angeschlossen ist. An einer Eingangsöffnung 8 mit der Dosierpumpe 2 ist über eine geeignete Muffe eine Tankleitung 9 angeschlossen, die zu dem Vorratstank 4 führt. Der Vorratstank 4 ist mit einer Befülleinrichtung 10 ausgestattet, mittels der ein Fluid in den Vorratstank 4 gefüllt werden kann. Bei dem Fluid kann es sich um ein Reduktionsmittel handeln, z. B. Dieselkraftstoff. Bei dem Vorratstank 4 kann es sich um einen separaten Tank handeln, in dem das Fluid, welches in den Abgasstrang einer Brennkraftmaschine einzuspritzen ist, aufgenommen und gespeichert ist. Alternativ kann es sich bei dem Vorratstank 4 um den Hauptkraftstofftank eines Fahrzeugs handeln, von dem die Tankleitung 9 abgezweigt ist und zur Dosierpumpe 2 führt.

Das System 1 verfügt über eine Steuerungseinrichtung 11, auch als "ECU" (Engine Control Unit) bekannt. Die ECU ist über eine Steuerleitung 12 mit der Dosierpumpe 2 verbunden, so dass die Dosierpumpe 2 durch die ECU 11 geeignet angesteuert werden kann.

Die Düse 3 ist an einem Abgasstrang 13 einer Brennkraftmaschine angeschlossen, nämlich stromaufwärts eines Katalysators 14. Die Strömungsrichtung, in der der Abgasstrang 13 bzw. der Katalysator 14 von einem Abgas der Brennkraftmaschine durchströmt werden, ist in Fig. 1 durch einen Pfeil kenntlich gemacht. An dem Katalysator 14 sind zusätzlich weitere Sensoren 15 angeschlossen, die erforderliche Messwerte über entsprechende Signalleitungen 16 an die ECU übermitteln.

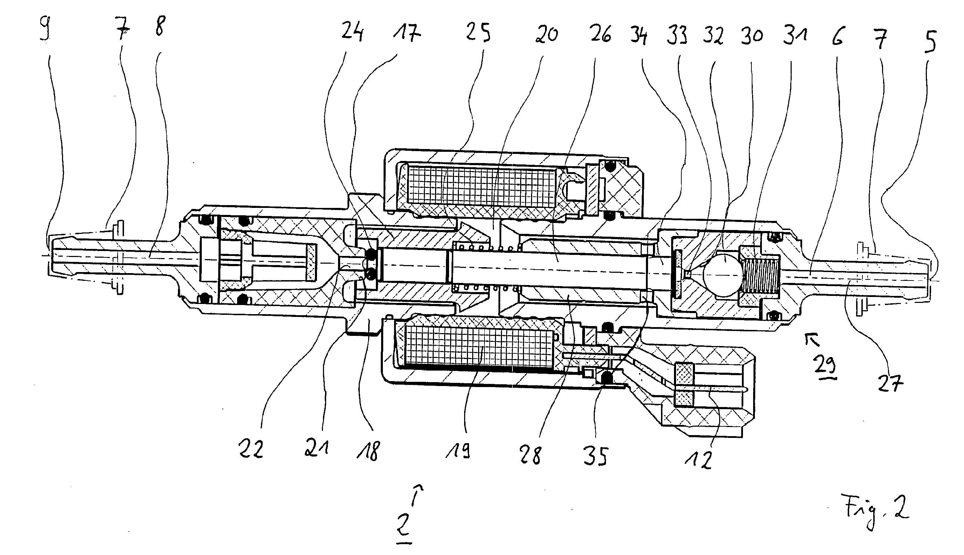

Ein Betrieb der Dosierpumpe 2 dient dazu, dass Reduktionsmittel aus dem Vorratstank 4 heraus in Richtung der Düse 3 unter Druck zu fördern, um das Reduktionsmittel in den Abgasstrang 13 stromaufwärts des Katalysators 14 einzuspritzen. Bspw. kann es sich bei dem Reduktionsmittel um Dieselkraftstoff handeln. Durch eine solche Einspritzung werden dem Abgas vor Eintritt in den Katalysator 14 unverbrannte Kohlenwasserstoffe beigemischt, so dass es in Folge einer anschließenden Oxidation dieser unverbrannten Kohlenwasserstoffe innerhalb des Katalysators zu einer gewünschten Erhöhung der Abgastemperatur kommt. Der Aufbau und die Funktionsweise der Dosierpumpe 2 ist nachstehend unter Bezugnahme auf die Figuren 2 bis 5 im Detail erläutert.

Die Dosierpumpe 2 ist als Hubkolbendosierpumpe ausgeführt und umfasst einen Kolben 17, der innerhalb eines Gehäuses 18 der Dosierpumpe 2 in seiner Längsrichtung verschieblich aufgenommen ist. Die Hubkolbendosierpumpe 2 ist elektromagnetisch angetrieben und umfasst entsprechend eine Antriebsspule 19, die in dem Gehäuse 18 aufgenommen ist und einen Hohlraum 20 umschließt, in dem der Kolben verschieblich aufgenommen ist.

Die Eingangsöffnung 8 der Hubkolbendosierpumpe 2, an der die Tankleitung 9 angeschlossen ist, führt zu einem sogenannten Nullabschluss 21, der in den Hohlraum 20 mündet. Der Nullabschluss 21 ist von einer Durchgangsbohrung 22 durchsetzt und angrenzend zum Hohlraum 20 mit einer ringförmigen Anlagefläche 23 versehen. An einer Stirnseite des Kolbens 17, die dem Nullabschluss 21 gegenüber liegt, ist ein Dichtmittel in Form eines O-Rings 24 befestigt. Der Kolben 17 ist durch eine Spiralfeder 25 in Richtung des Nullabschlusses 21 vorgespannt. An dem Kolben 17 ist ein Stangenelement 26 befestigt, das sich im Wesentlichen parallel zur Längsachse 27 der Hubkolbendosierpumpe 2 in Richtung von deren Ausgangsöffnung 6 erstreckt, wobei das Stangenelement 26 in einem Führungsflansch 28 längsverschieblich geführt ist.

Angrenzend an die Ausgangsöffnung 6 ist innerhalb des Gehäuses 18 der Hubkolbendosierpumpe 2 ein Rückschlagventil 29 aufgenommen, das ein in Richtung des Hohlraums 20 federvorgespanntes Kugelelement 30 aufweist. Diese Federvorspannung wird durch ein Federelement 31 erzielt, die das Kugelelement 30 in eine konische Sitzfläche 32 hineindrückt. Das Rückschlagventil 29 weist angrenzend an die Hubkolbendosierpumpe 2 eine Öffnung 33 auf, die in eine Zylinderkammer 34 am Rande des Hohlraums 20 mündet. In dem Führungsflansch 28 sind angrenzend an die Zylinderkammer 34 Dosieröffnungen 35 ausgebildet, die eine Fluidverbindung zwischen der Zylinderkammer 24 und dem Hohlraum 20 gewährleisten. Falls in dem Hohlraum 20 bzw. in der Zylinderkammer 34 ein ausreichend hoher Druck erzeugt wird, gelangt das Kugelelement 30 gegen die Kraft des Federelements 31 außer Kontakt mit seiner Sitzfläche 32, so dass eine Strömung heraus aus dem Hohlraum 20 durch die Ausgangsöffnung 6 in die Dosierleitung 5 möglich ist, die mit der Muffe 7 an die Ausgangsöffnung 6 angeschlossen ist.

Der Normalbetrieb der Hubkolbendosierpumpe 2 funktioniert nun wie folgt:

Vor einem Bestromen der Antriebspule 19 befindet sich der Kolben 17 in einer Ausgangstellung, wobei der O-Ring 24 gegen die Anlagefläche 23 des Nullabschlusses 21 gedrückt wird. Dies ist in der Darstellung von Fig. 2 gezeigt. Durch den Kontakt des O-Rings 24 mit der Anlagefläche 23 ist der Hohlraum 20 in Richtung der Ausgangsöffnung 6 bzw des Vorratstanks 4 abgedichtet, so dass zwischen dem Hohlraum 20 und dem Vorratstank 4 keine Fluidverbindung besteht. In der Ausgangsstellung des Kolbens 17 befindet sich eine Stirnseite des Stangenelements 26 in etwa im Bereich der Dosieröffnung 35, so dass die Zylinderkammer 34 in Fluidverbindung mit dem Hohlraum 20 steht. Falls der Hohlraum 20 mit einem Fluid bzw dem Reduktionsmittel gefüllt ist, ist somit auch die Zylinderkammer 34 mit dem Reduktionsmittel gefüllt.

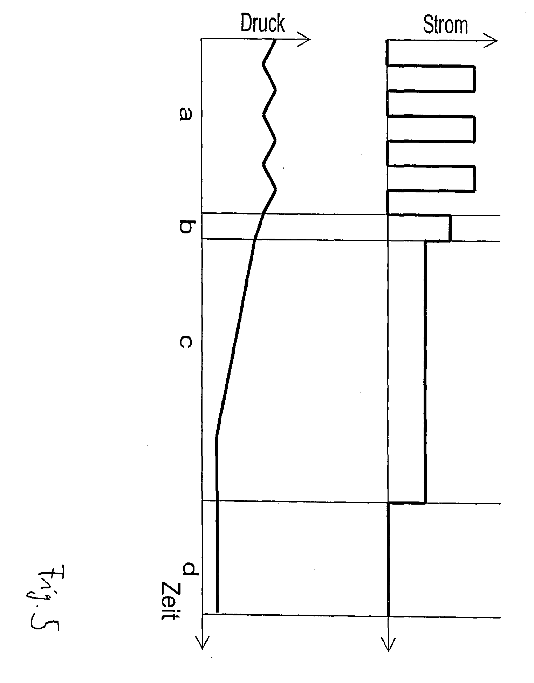

Um das Reduktionsmittel in Richtung der Düse 3 zu fördern, wird die Antriebsspule 19 über die Steuerleitung 12 geeignet bestromt. In Folge einer Bestromung der Antriebsspule 19 wird der Kolben 17 - in der Zeichnungsebene von Fig. 2 nach rechts - in Richtung der Zylinderkammer 34 verschoben. Im Zuge dieses Verschiebens des Kolbens 17 überstreicht die vordere Stirnseite des Stangenelements 26 vollständig die Dosieröffnung 35, so dass, nachdem die Dosieröffnung 35 von dem Stangenelement 26 vollständig überstrichen ist, die Zylinderkammer 34 nicht länger in Fluidverbindung mit dem Hohlraum 20 steht. Ein weiteres Verschieben des Stangenelements 20 in Richtung des Rückschlagventils erhöht den Druck innerhalb der Zylinderkammer 34, so dass das in der Zylinderkammer 34 enthaltene Reduktionsmittel durch die Öffnung 33 in das Rückschlagventil 29 einströmt und bei geöffnetem Kugelelement 30 in die Dosierleitung 5 hinein befördert wird. Ein stetiger Förderstrom des Reduktionsmittel in Richtung der Düse 3 wird mittels der Hubkolbendosierpumpe 2 dadurch erzielt, dass die Antriebsspule 19 pulsierend bestromt wird. In Fig. 5 ist dies in dem oberen Diagramm für den Abschnitt a gezeigt. Nach einem ersten Förderhub wird die Antriebsspule 19 entregt, so dass der Kolben 17 durch die Federvorspannung zurück in seine Ausgangsstellung bewegt wird. Hierbei wird die Dosieröffnung 35 durch das Stangenelement 26 freigegeben, so dass sich die Zylinderkammer 34 erneut mit dem Reduktionsmittel füllen kann. Ein anschießendes Bestromen der Antriebsspule 19 führt zu einem erneuten Verschieben des Kolben 17 bzw. des Stangenelements 26 nach rechts, was wie vorstehend erläutert das Reduktionsmittel aus der Zylinderkammer 34 in Richtung des Rückschlagventils 29 verdrängt.

Das Rückschlagventil 29 ist leckagebehaftet ausgeführt. Dies bedeutet, dass in der Schließstellung, wenn das Kugelelement 30 in Kontakt mit seiner Sitzfläche 32 ist, geringe Leckageströme in Richtung der Öffnung 33 bzw in die Zylinderkammer 34 hinein auftreten können. Solche Leckagströme werden durch einen Metall-Kontakt zwischen Kugelelement 30 und Sitzfläche 32 erzielt. Mittels einer definierten Oberflächenrauhigkeit von Kugelelement und / oder Sitzfläche lassen sich vorbestimmte Leckageströme einstellen.

Bei dem Erfindungsgemäßen System 1 ist in den Phasen, wenn kein gezieltes Fördern des Reduktionsmittels in Richtung der Düsen 3 vorliegt, eine gezielte Druckminderung in der Dosierleitung 5 möglich. Dies funktioniert im Einzelnen wie folgt:

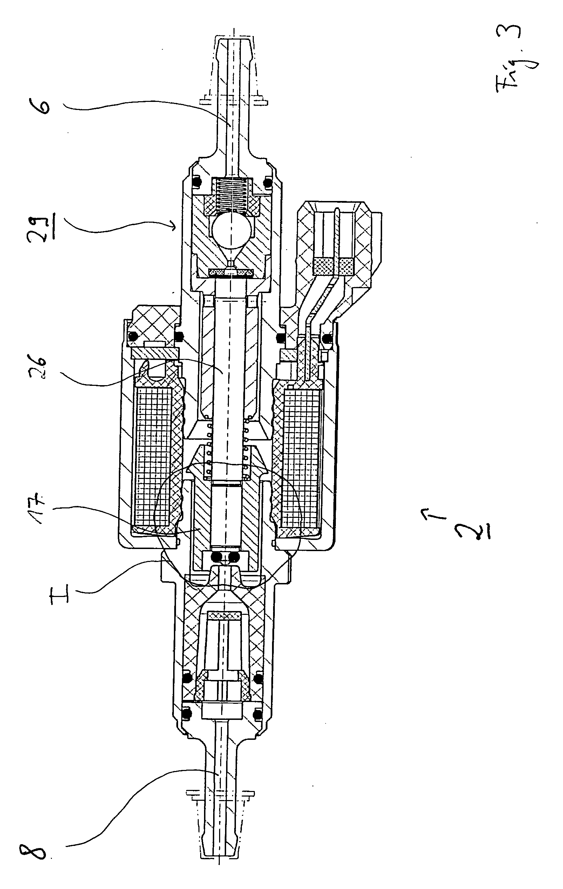

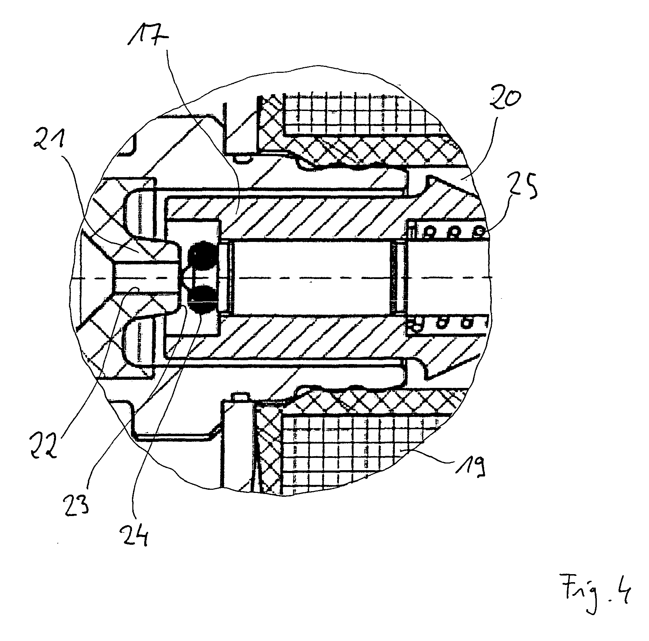

Durch ein geeignetes Bestromen der Antriebsspule 19 mit reduziertem Strom lässt sich der Kolben 17 in eine Zwischenstellung überführen, in der der der O-Ring 24 von der Anlagefläche 23 des Nullabschlusses 21 abgehoben ist. Dieses Bestromen mit reduziertem Strom ist in dem Diagramm von Fig. 5 oben in dem Abschnitt b verdeutlicht. Das Bestromen der Antriebsspule 19 gemäß der Phase b reicht aus, dass der Kolben 17 wie erläutert von Nullabschluss 21 abhebt. Jedoch reicht die Stromstärke gemäß der Phase b nicht aus, dass der Kolben 17 einen vollständigen Förderhub in Richtung der Zylinderkammer 34 ausführt, um das Reduktionsmittel durch das Rückschlagventil 29 hindurch in Richtung der Düse 3 zu fördern. Nach der Phase b wird der Strom, mit dem die Antriebsspule 19 erregt wird, in einer Phase c weiter reduziert. Die Stromstärke gemäß der Phase c reicht aus, dem Kolben 17 in einer Zwischenstellung zu halten. Eine solche Zwischenstellung entspricht einem "Schwebezustand" und ist in der Darstellung von Fig. 3 gezeigt. Es ist zu erkennen, dass hierin sowohl der O-Ring 24 von dem Nullabschluss 21 abgehoben ist, als dass auch die Dosieröffnung 35 in der Zylinderkammer 34 nicht vollständig durch die vordere Stirnseite des Stangenelements 26 verschlossen ist. Dies bedeutet, dass in der Zwischenstellung des Kolbens 17 das Reduktionsmittel von der Dosierleitung 5 durch das Rückschlagventil 29, den Hohlraum 20 und den Nullabschluss 21 durch die Tankleitung 9 in den Vorratstank 4 zurückströmen kann. Je nachdem, wie austariert dieser Strom gegen die Federkraft der Spiralfeder 25 ist, bleibt ein mehr oder weniger geringer Restdruck in der Dosierleitung 5 bestehen. Der Bereich I von Fig. 3 ist in der Fig. 4 in einem vergrößertem Ausschnitt dargestellt, was ein Abheben des O-Rings 24 von dem Nullabschluss 21 in der Zwischenstellung des Kolbens 17 verdeutlicht.

Die Dosierpumpe 2 wird unter Berücksichtigung der Zwischenstellung des Kolbens 17 als 2-2-Wegeventil verwendet. Mit der Dosierpumpe 2 ist im Normalbetrieb ein Fördern des Reduktionsmittels aus dem Vorratstank 4 zur Einspritzdüse 3 möglich. Falls der Kolben 17 in seiner Zwischenstellung gehalten ist, d. h. lediglich einen Teilhub ausführt, ist durch die Dosierpumpe 2 hindurch auch eine Strömungsumkehr in Richtung des Vorratstanks 4 möglich, um im Ergebnis eine Druckminderung in der Dosierleitung 5 zu erzielen. Weitere separate Rückleitungen sind hierzu nicht erforderlich.

In den Phasen b und c (vgl. Diagramm von Fig. 5) können auch andersartige, geeignete Stromprofile für die Antriebsspule 19 eingestellt werden, z. B. Dither oder Stromprofile mit wechselnden Stromniveaus, um im Ergebnis einen möglichst geringen Druck in der Dosierleitung 5 zu erzielen. Das Diagramm von Fig. 5 verdeutlicht, dass in der Phase c - bei konstantem Strom und einem entsprechenden Halten des Kolbens 17 in seiner Zwischenstellung - der Druck in der Dosierleitung 5 allmählich abklingt. In der Phase b wird der Strom für die Antriebsspule 19 auf 0 zurückgesetzt, so dass sich der Kolben 17 in Folge der Federkraft wieder in Kontakt mit dem Nullabschluss 21 gelangt und der O-Ring 24 gegen die Anlagefläche 23 abdichtet. Hierbei bleibt in der Dosierleitung 5 ein geringer Restdruck bestehen, der selbst bei verschlossenem Nullabschluss, wenn die Fluidverbindung in Richtung des Vorratstanks 4 geschlossen ist, nicht weiter abnimmt. Die Leckageeigenschaft des Rückschlagventils, die ein gezieltes Rückströmens des Reduktionsmittels von der Dosierleitung 5 hinein in den Hohlraum 20 der Dosierpumpe 2 gewährleistet, wird wie vorstehend erläutert eine Metallkontakt zwischen dem Kugelelement 30 und seiner Sitzfläche 32 erzielt. Alternativ hierzu kann die Leckageeigenschaft des Rückschlagventils auch durch eine undichte Prägung bzw. Spanung erzielt werden, oder durch ein tatsächlich dichtendes Rückschlagventil, das über einen Bypass verfügt, der in Richtung der Dosierpumpe 2 zurückführt. Die Funktionsweise der Dosierpumpe 2, die in einer Zwischenstellung des Kolbens 17 eine Fluidverbindung zwischen Rückschlagventil und Vorratstank vorsieht, bleibt von der Beschaffenheit des Rückschlagsventils unbeeinflusst.

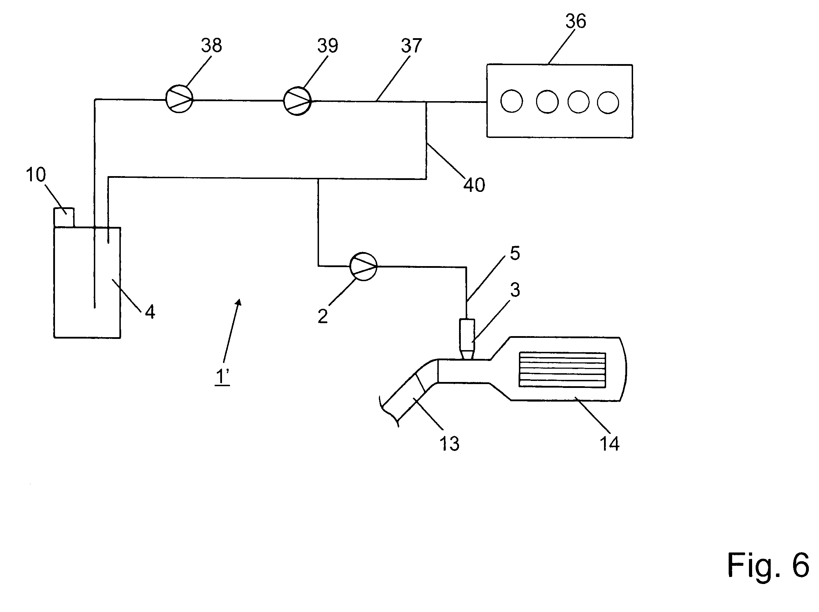

Fig. 6 zeigt eine vereinfachte Gesamtansicht einer weiteren Ausführungsform des erfindungsgemäßen Systems 1'. Die Funktionsweise der Dosierpumpe 2 entspricht vollumfänglich der vorstehend gemachten Erläuterung. Das System 1' gemäß der Darstellung in Fig. 6 unterscheidet sich von dem System gemäß Fig. 1 lediglich in der Anordnung der Dosierpumpe 2 in einem Leitungssystem eines Verbrennungsmotors, wie nachstehend im Detail erläutert.

Ein Verbrennungsmotor 36 ist mittels einer Einspritzleitung 37 mit dem Vorratstank 4 verbunden, in dem der Kraftstoff für den Motor 36 gespeichert ist. In der Einspritzleitung 37 ist zumindest eine Einspritzpumpe vorgesehen, um den Kraftstoff aus dem Vorratstank 4 mit ausreichend hohem Druck zum Verbrennungsmotor 36 zu fördern. Gemäß der Darstellung von Fig. 6 können in der Einspritzleitung eine erste Kraftstoffpumpe 38 und eine zweite Kraftstoffpumpe 39 angeordnet sein, die den Kraftstoff mit ausreichend hohem Druck zum Motor 36 hin fördern. Die erste Kraftstoffpumpe 38 gewährleistet dabei ein erstes Ansaugen des Kraftstoffs aus dem Vorratstank 4 mit geringem Druckniveau, wobei die zweite Kraftstoffpumpe 39 den Förderdruck in Richtung des Motors 36 nochmals erhöht. Bei dem Kraftstoff, der in dem Vorratstank 4 gespeichert ist und zum Betrieb des Motors 36 bzw. zum Einspritzen in den Abgasstrang 13 dient, kann es sich um Dieselkraftstoff handeln.

Von der Einspritzleitung 37 zweigt eine Rücklaufleitung 40 ab, nämlich zwischen dem Motor 36 und der zweiten Kraftstoffpumpe 39. Die Rücklaufleitung 40 führt zurück zum Vorratstank 4. Die Dosierpumpe 2 ist an diese Rücklaufleitung 40 angeschlossen und wird somit aus dieser gespeist. Die Kraftstoffpumpen 38 und 39 werden beim Betrieb des Motors 36 derart eingestellt, dass die von ihnen geförderte Menge an Kraftstoff geringfügig höher ist als eine Kraftstoffmenge, die für den jeweiligen Betriebszustand des Motors 36 erforderlich ist. Die überschüssige Menge an Kraftstoff wird entsprechend durch die Rücklaufleitung 40 in Richtung des Vorratstank 4 zurück geführt. Dieser überschüssige Anteil an Kraftstoff, der in der Rücklaufleitung 40 geführt wird, ist ausreichend, um die Dosierpumpe 2 zu speisen. Dies liegt daran, dass die Kraftstoffmenge, die in den Katalysator 14 bzw. den Abgasstrang 13 einzuspritzen ist, im Vergleich zur Kraftstoffmenge, die dem Verbrennungsmotor 36 zugeführt ist, sehr gering ist.

Bei der Ausführungsform gemäß Fig. 6 ist die Dosierpumpe 2 in gleicher Weise wie bei der Ausführungsform gemäß Fig. 1 durch die Dosierleitung 5 mit der Dosiereinheit 3 in Form der Düse 3 verbunden. Das System 1' hat in der Ausführungsform gemäß Fig. 6 gegenüber jener von Fig. 1 den Vorteil, dass kein separater Vorratstank 4 für den Kraftstoff notwendig ist, der in den Abgasstrang 13 zur Erhöhung der Abgastemperatur einzuspritzen ist. Die Menge dieses Kraftstoffs lässt sich mittels der Rücklaufleitung 40 von der Einspritzleitung 37 wie vorstehend erläutert für die Dosierpumpe 2 abzweigen.

## Patentansprüche

1. System zum Dosieren eines Fluids von einem Vorratstank (4) an eine Dosiereinheit (3), umfassend
eine Dosierpumpe (2), die durch eine Tankleitung (9) mit dem Vorratstank (4) und durch eine Dosierleitung (5) mit der Dosiereinheit (3) jeweils in Fluidverbindung steht,
wobei ein Betätigen der Dosierpumpe (2) das Fluid aus dem Vorratstank (4) zur Dosiereinheit (3) fördert,
wobei zwischen Dosierpumpe (2) und Dosiereinheit (3) ein in Richtung der Dosiereinheit (3) öffnendes Rückschlagventil (29) vorgesehen ist, welches in seiner Schließstellung leckagebehaftet ist,
wobei in einer vorbestimmten Betriebsstellung der Dosierpumpe (2) eine Fluidverbindung von dem Rückschlagventil (29) zum Vorratstank (4) vorliegt, so dass ein Fluid-Leckagestrom in Richtung des Vorratstanks (4) eine Druckminderung in der Dosierleitung (5) bewirkt,
**dadurch gekennzeichnet,**
**dass** die Dosierpumpe (2) in Form einer magnetisch betätigbaren Hubkolbenpumpe (2) mit einem Kolben (17) ausgeführt ist,
**dass** der Kolben (17) zwischen einer Ausgangsstellung, in der eine Fluidverbindung zwischen Dosierpumpe (2) und Vorratstank (4) geschlossen ist, und einer Endstellung, in der ein Förderhub in Richtung der Dosiereinheit (3) ausgeführt ist, verschiebbar ist, und dass der Kolben (17) in der vorbestimmten Betriebsstellung der Dosierpumpe (2) in einer Zwischenstellung zwischen der Ausgangsstellung und der Endstellung angeordnet ist.

2. System (1) nach Anspruch 1, bei dem ein Leckagestrom des Rückschlagventils (29) in seiner Schließstellung einen vorbestimmten Durchsatz annimmt.

3. System nach Anspruch 2, bei dem sich der vorbestimmte Durchsatz des Leckagestroms durch eine definierte Oberflächenrauhigkeit eines Schließelements (30) des Rückschlagventils (29) und/oder seiner Sitzfläche (32) einstellt.

4. System nach Anspruch 2 oder 3, bei dem sich der vorbestimmte Durchsatz des Leckagestroms in Folge einer Durchlassöffnung einstellt, die zwischen einem Schließelement des Rückschlagventils (29) und einer diesem Schließelement zugeordneten Sitzfläche (32) vorgesehen ist, wobei die Durchlassöffnung in dem Schließelement und/oder in der Sitzfläche ausgebildet ist.

5. System nach einem der Ansprüche 1 bis 4, bei dem das Rückschlagventil (29) in einem Gehäuse der Hubkolbendosierpumpe (2) aufgenommen oder in der Dosierleitung (5) angeordnet ist.

6. System nach einem der Ansprüche 1 bis 5, bei dem ein Fördern des Fluids in Richtung der Dosiereinheit (3) durch eine translatorische Verschiebung des Kolbens (17) innerhalb des Pumpengehäuses erfolgt.

7. System nach einem der Ansprüche 1 bis 6, bei dem die Dosierpumpe (2) einen elektromagnetischen Antrieb mit einer Antriebsspule (19) aufweist.

8. System nach Anspruch 7, bei dem die Antriebsspule (19) im Vergleich zu einem Normalbetrieb der Dosierpumpe (2) mit vermindertem Erregerstrom antreibbar ist, so dass der Kolben (17) in seiner Zwischenstellung positionierbar ist.

9. System nach Anspruch 8, bei dem die Antriebsspule (19) mit verschiedenen Stromprofilen erregbar ist, um den Kolben (17) in einer Zwischenstellung zu halten.

10. System nach einem der Ansprüche 1 bis 9, bei dem die Dosiereinheit (3) eine passive Zuspritzdüse ist, um das Fluid in Form von Dieselkraftstoff in einen Abgasstrang eines Kraftfahrzeugs einzuspritzen.

11. Verfahren zum Dosieren eines Fluids von einem Vorratstank (4) an eine Dosiereinheit (3), mit den Schritten:
Bereitstellen eines Systems (1) nach Anspruch 1,
Betätigen der Dosierpumpe (2) zum Fördern des Fluids in Richtung der Dosiereinheit (3), indem ein Förderelement der Dosierpumpe (2) von einer Ausgangsstellung in eine Endstellung verlagert wird,
Ansteuern der Dosierpumpe (2) derart, dass das Förderelement in einer zwischen der Ausgangsstellung und der Endstellung befindlichen Zwischenstellung gehalten wird, in der eine Fluidverbindung zwischen dem Rückschlagventil (29) und der Tankleitung (9) oder der Rücklaufleitung durch die Dosierpumpe (2) hindurch besteht, so dass ein Fluid-Leckagestrom in Richtung des Vorratstanks (4) strömbar ist und **dadurch** eine Druckminderung in der Dosierleitung (5) eintritt.

12. Verfahren nach Anspruch 11, bei dem die Dosierpumpe (2) in Form einer Hubkolbenpumpe mit einem Kolben (17) als Förderelement ausgeführt ist, wobei die Hubkolbenpumpe (2) derart angetrieben wird, dass der Kolben (17) ausgehend von seiner Ausgangsstellung in seine Zwischenstellung überführt wird.

13. Verfahren nach Anspruch 12, bei dem die Hubkolbenpumpe einen elektromagnetischen Antrieb mit einer Antriebsspule (19) aufweist, wobei der Kolben (17) in seine Zwischenstellung überführt wird, indem die Antriebsspule (19) mit einem im Vergleich zum Normalbetrieb der Dosierpumpe (2) verminderten Erregerstrom angesteuert wird.

14. Verfahren nach einem der Ansprüche 11 bis 13, bei dem die Dosiereinheit (3) eine an einem Abgasstrang eines Kraftfahrzeugs angebrachte Einspritzdüse ist, mit der das Fluid in Form von Dieselkraftstoff in den Abgasstrang eingespritzt wird.

15. Verfahren nach einem der Ansprüche 11 bis 14, bei dem ein System (1) nach einem der Ansprüche 1 bis 11 verwendet wird.
